Europäisches Patentamt

European Patent Office

Office européen des brevets

(19)

(11) Veröffentlichungsnummer: **0 234 318**
**B1**

(12) # EUROPÄISCHE PATENTSCHRIFT

(45) Veröffentlichungstag der Patentschrift: **12.09.90**

(21) Anmeldenummer: **87101172.2**

(22) Anmeldetag: **28.01.87**

(51) Int. Cl.⁵: **F 02 N 17/053**

(54) Vorrichtung zum Vorwärmen der Ansaugluft eines Mehrzylinder-Dieselmotors.

(30) Priorität: **14.02.86 HU 63986**

(43) Veröffentlichungstag der Anmeldung:
**02.09.87 Patentblatt 87/36**

(45) Bekanntmachung des Hinweises auf die
Patenterteilung:
**12.09.90 Patentblatt 90/37**

(84) Benannte Vertragsstaaten:
**AT BE CH DE ES FR GB GR IT LI LU NL SE**

(56) Entgegenhaltungen:
**DE-A-1 576 017
DE-A-2 630 863
DE-A-2 743 134
FR-A-2 397 536**

(73) Patentinhaber: **"TRANSINNOV" Közlekedési
Müszaki Fejlesztö Leányvállalat
Thán Károly u. 3-5
Budapest XI (HU)**

(72) Erfinder: **Csaszar, György, Dipl.-Ing.
Ujvidék u. 55
Budapest XIV (HU)**
Erfinder: **Batho, Mihály
Villányi u. 62
Budapest XI (HU)**

(74) Vertreter: **Patentanwälte Viering & Jentschura
Steinsdorfstrasse 6
D-8000 München 22 (DE)**

Courier Press, Leamington Spa, England.

## Beschreibung

Die Erfindung bezieht sich auf eine Vorrichtung zum Vorwärmen der Ansaugluft eines Mehrzylinder-Dieselmotors, bei welcher in dem Saugrohr des Motors eine thermoelektrische Zündvorrichtung und ein Hochdruck-Kraftstoffzerstäuber angeordnet sind, der über eine Rohrleitung und ein Hochdruck-Abzapfventil mit der Druckseite der Einspritzpumpe des Motors verbindbar ist, dessen Einspritzdüsen mit der Einspritzpumpe über Druckrohre verbunden ist.

Das Anlassen eines Dieselmotors in kaltem Zustand (im Winter, bei einer Temperatur unter 0°C) ist wie wohlbekannt problematisch, weil die Temperatur der im Zylinderkopf (Verbrennungsraum) komprimierten Luft auch bei Erfüllung der anderen Bedingungen der Kalt-Anlaßbarkeit bei einer von dem Anlaßmotor bestimmten Motordrehzahl am Ende der Kompressionsperiode nicht immer die Zündtemperatur des eingespritzten Kraftstoffes (Gasöls) erreicht. Dieses Problem taucht insbesondere bei den immer mehr verbreiteten Motoren mit direkter Einspritzung auf, wo eine elektrische Glühkerze im Brennraum aus konstruktiven Gründen nicht angeordnet werden kann.

Zwecks Erleichterung des Kaltstartens eines Dieselmotors ohne Glühkerze sind mehrere Lösungen verbreitet, welche grundsätzlich in drei Gruppen eingereiht werden können.

Einer dieser Lösungen besteht aus dem Vorwärmen der eingesaugten Luft mittels eines vom Akkumulator (Batterie) gespeisten, elektrisch geheizten Glühfadens. Die Nachteile dieser Lösung sind wie folgt:

—Der Akkumulator mit einer in der Winterperiode ohnehin verminderten Kapazität ist stark beansprucht;

—Die Klemmspannung des von dem elektrischen Vorwärmer belasteten Akkumulators fällt derart ab, daß der Anlaßmotor den Motor, der im kalten Zustand einen höheren Momentbedarf aufweist, nicht oder nur mit zu niedriger Drehzahl antreiben kann, was zum Anlassen unzureichend ist.

—Die Heizleistung des in das Saugrohr einsetzbaren Heizwiderstandes ist wegen der Kapazitätsgrenzen des Akkumulators gering, so daß die eingesaugte Luft nicht auf eine zur sicheren Selbstzündung des Kraftstoffes erforderliche Temperatur erwärmt werden kann.

Eine weitere Lösung besteht aus der Verwendung eines äußeren Anlaßhilfsmittels (Startpilots), wobei ein Material (Gas) niedrigen Entzündungspunktes (geringer Kompressionstoleranz) der eingesaugten Luft beigemischt wird.

Die Nachteile dieser Lösung sind wie folgt:

—Es wird ein gesondertes Hilfsmaterial benötigt, dessen Sicherstellung eine ständige Mehrbeachtung verlangt;

—Wenn das äußere Anlaßhilfsmittel nicht am Motor ständig ammontiert ausgebildet ist und nicht vom Fahrersitz aus bedient werden kann, ist die Benützung schwierig und verlangt im allgemeinen die Mitwirkung von zwei Personen.

Eine andere Lösung besteht aus der Vorwärmung der eingesaugten Luft mittels im Saugrohr thermoelektrisch gezündeten und verbrannten Kraftstoffes. Eine solche Lösung ist beispielsweise aus der DE—A—26 30 863 bekannt. Der in dieser Druckschrift beschriebene Ansaugluft-Vorwärmer weist eine Kraftstofförderpumpe auf, die in den von der Hauptkraftstoffleitung gebildeten Niederdruckkreis mit einem Druck von nur einigen bar eingeschaltet ist. Diese Kraftstofförderpumpe versorgt die Einspritzpumpe, welche den Kraftstoff auf den zum Einspritzen in den Zylinder erforderlich hohen Druck von einigen hundert bar bringt. Dabei erfolgt das Einspritzen über in den Zylinderkopf eingebaute Einspritzdüsen, die zumeist mit den Einspritzpumpen zusammengebaut sind. Aus dem Niederdruckkreis, in welchen die Kraftstofförderpumpe eingeschaltet ist, wird über eine Dosiereinrichtung eine gesteurte Kraftstoffmenge entnommen und in das Ansaugrohr ein Kraftstoffstrahl mit niedrigem Druck und niedriger Geschwindigkeit eingespeist. Von dem eingespeisten Kraftstoff wird eine Heizspirale benetzt, auf welcher der Kraftstoff verdampft und sich endzündet. Hierzu kann eine Flammkerze nach der FR—A—2 397 536 verwendet werden, welche zugleich den Einspeiskanal und die Heizspirale aufweist. Obwohl diese Lösung akkumulatorschonend ist, weil ein Glühfaden mit geringer Leistungsaufnahme zum Zünden des Kraftstoffes im Saugrohr ausreicht, haben die verwendeten Lösungen die folgenden Nachteile:

—Die Kraftstoffzufuhr erfolgt entweder unter der Schwerkraft oder unter einem von der Kraftstoff-Förderpumpe bereitgestellten Druck, ist also empfindlich gegen Verstopfungen und hat geringe Betriebssicherheit;

—Wegen der gravitativen oder Niederdruck-Kraftstoffzufuhr ist die Vermischung des Gasöls und der Luft während des Verbrennens schlecht und der Kraftstoff gelangt mit der Luft nur auf kleiner Oberfläche in Berührung; deshalb ist die abgegebene Wärmemenge begrenzt ufd die Flamme erzeugt Ruß, wodurch auch die konstruktiven Bauteile des Motors beschädigt werden können.

Aus der DE—A—27 43 134 ist eine gattungsgemäße Einrichtung zum Vorwärmen der Ansaugluft bekannt, bei welcher die gesamte, von allen Einspritzpumpen zusammen geförderte Kraftstoffmenge entweder aus dem Druckraum einer Verteiler-Einspritzpumpe entnommen wird oder aus jeder Hochdruckleitung zwischen Einspritzpumpe und Einspritzdüse entnommen und in eine gemeinsame Sammelleitung geführt wird, wonach in der ersten Startphase der umgeleitete Kraftstoff über die Flammkerze fein zerstäubt über eine den Kraftstoff entzündende Heizspirale in das Saugrohr des Motors eingespritzt wird. Nachdem die Verbrennungsgase das Ansaugrohr sowie den gesamten Motorraum ausreichend aufgeheizt haben, wird in der zweiten Startphase die Kraftstoffzufuhr in das Saugrohr unterbrochen und der Motor kann einige Umdrehungen leer laufen, wodurch die im Ansaugrohr und Zylinderraum befindlichen Abgase von der nachgesaugten Frischluft herausgespült werden. Darauf erfolgt die dritte Startphase, in welcher schließlich Kraftstoff in die Zylinder eingespritzt wird, der sich allein durch Verdichtung entzünden kann. Nachteilig bei dieser Vorwärmeinrichtung ist, daß die Frischluft nicht gleichzeitig aufgeheizt ird und die Zündung erfolgen kann, was eine lange Startzeit zur Folge hat. Außerdem muß man bei diesem Stand der Technik mehr heizen als eigentlich erforderlich, da die in der dritten Startphase zum Anspringen des Motors angesaugte Frischluft nur durch das erhitzte Saugrohr und den erhitzten Zylinder aufgeheizt wird. Darüberhinaus geht das Verbrennen der gesamten, von allen Einspritzpumpen zusammen geförderten Kraftstoffmenge in dem Saugrohr häufig mit Verrußen einher.

Die Erfindung löst die Aufgabe eine gattungsgemäße Vorrichtung zum Vorwärmen der Ansaugluft eines Mehrzyliner-Dieselmotors zu schaffen, bei welcher ein gleichzeitiges Anspringen des Motors und Vorheizen der angesaugten Frischluft bei optimaler Verbrennung des zu diesem Zweck in das Saugrohr eingespeisten Kraftstoffs gewährleistet ist.

Diese Aufgabe wird erfindungsgemäß dadurch gelöst, daß das Hochdruck-Abzapfventil ein einjustierbares, die Vorwärmkraftstoffmenge steuerndes Ventil ist, das in das Druckrohr zwischen der Einspritzpumpe des Motors und der Einspritzdüse nur eines der Zylinder eingeschaltet ist, wobei durch das Hochdruck-Abzapfventil nur eine solche Teilmenge des Kraftstoffes in das Saugrohr eingespeist wird, daß das Warmluft-Verbrennungsprodukt-Gemisch den zur Anlaßbarkeit des Motors nötigen Sauerstoffgehalt aufweist und daß den Motoreinspritzdüsen während dieser Vorwärmphase die zum Starten erforderliche Kraftstoffmenge zugeführt wird.

Die erfindungsgemäße Vorrichtung verfügt vorteilhaft über ein derartiges Hochdruck-Abzapfventil, in dessen Ventilgehäuse ausgebildete Druckrohranschlüsse mit Schraubgewinde über Durchflußbohrungen miteinander verbunden sind, und welche einen auf einem Ventilsitz, der an einem dieser Durchflußbohrungen ausgebildet ist, aufliegenden, im Ventilraum angeordneten Ventilkörper und eine am Ventilgehäuse über ein Schraubgewinde angeschlossene, mit einem Mitnehmeranschluß versehen Ventilpresse aufweist. An dieser Ventilpresse ist ein mit einem Mitnehmer und einer Ventilscheibe versehener Betätigungsbolzen angeschlossen, welcher von einer Feder an den mit dem Ventilsitz versehenen durchbohrten Deckel gedrückt ist. Der Ventilraum ist über eine Bohrung an einem am Ventilgehäuse ausgebildeten Abzapfanschluß mit Gewinde angeschlossen.

Als am Saugrohr angeschlossener Kraftstoffzerstäuber kann jedwelcher, auf dem Prinzip der Druckzerstäubung funktionierender, an sich bekannter Zerstäuber verwendet werden, so auch eine bei Dieselmotoren allgemein verwendete Einspritzdüse.

Der am Saugrohr angeschlossene Kraftstoffzerstäuber und die thermoelektrische Zündvorrichtung können als eine Baueinheit ausgebildet sein.

Als Kraftstoffzerstäuber kann vorteilhaft eine Konstruktion verwendet werden, bei der das eine Ende des Zerstäuberrumpfes einen Gewindeanschluß aufweist, welcher über eine Bohrung mit einem am anderen Ende des Zerstäuberrumpfes ausgebildeten, eine Warze umgebenden ringförmigen Kanal verbunden ist, welcher mittels einer auf der Warze aufliegenden, mit einer Bohrung versehenen Membran abgeschlossen ist. Diese erwähnte Membran wird von einem Zerstäubergehäuse an den Zerstäuberrumpf gedrückt, wobei am Zerstäubergehäuse ein gelöchterter Mantel angeschlossen ist, der einen der Bohrung der Membran gegenüberliegenden, mit einem Ende auf Masse gelegten und mit dem anderen Ende einem zum elektrischen Anschluß isoliert ausgeführten elektrischen Glühfaden umgibt.

Die erfindngsgemäße Vorrichtung findet ihre primäre Anwendung bei Dieselmotoren mit direkter Einspritzung, wo die das Kaltstarten (Anlassen unter kalten Temperaturen) erleichternde elektrische Glühkerze im Brennraum aus konstruktiven Gründen nicht angeordnet werden kann.

Die Dieselmotoren mit direkter Einspritzung verbreiten sich infolge ihres geringeren spezifischen Kraftstoffverbrauches und ihrer höheren spezifischen Leistung immer mehr gegenüber den bisher verwendeten Dieselmotoren mit geteiltem Brennraum (Vorkammer, Wirbelkammer, usw.). Ihre weitere Verbreitung ist in erster Linie in der kleineren Leistungskategorie durch die Schwierigkeiten beim Kaltstarten verhindert. Diese Schwierigkeiten beim Kaltstarten können zwar mittels Erhöhung des Kompressionsverhältnisses in bestimmtem Maße beseitigt werden, was aber mit zwei bedeutenden Nachteilen verbunden ist. Einerseits wird nämlich die mechanische Beanspruchung der konstruktiven Teile durch den erhöhten Einspritzdruck erhöht, und andererseits entstehen Stickoxide im Abgas auf Wirkung der erhöhten Kompressionstemperatur, wodurch die Umwelt stark verschmutzt wird. Deshalb sind in den meisten Ländern behördliche Vorschriften für den zugelassenen Stickoxidgehalt des Auspuffgases der Dieselmotoren gültig.

Mit der Verwendung der erfindungsgemäßen Vorrichtung kann das Kaltstarten von Dieselmotoren mit direkter Einspritzung—auch in der geringeren Leistungskategorie—ohne Erhöhung des Kompressionsverhältnisses erreicht werden. Dadurch besteht die Möglichkeit, daß Dieselmotoren mit direkter Einspritzung (also mit ungeteiltem Verbrennungsraum) mit geringerem Kraftstoffverbrauch und höherer spezifischer Leistung auch in der geringeren Leistungskategorie verbreitet werden können.

Die erfindungsgemäße Vorrichtung kann an jedwelchen, mit einer Einspritzpumpe versehenen Dieselmotor nachträglich, auf einfache Weise anmontiert werden, so können die Kaltstarteigenschaften der bereits arbeitenden Diesel-Kraftfahrzeuge bedeutend erhöht werden. Bei Anwesenheit der anderen Anlaßbedingungen (entsprechender Zustand des Akkumulators, Gewährleistung der fortlaufenden Zufuhr des Brennstoffes zur Einspritzpumpe usw.) ist die Temperaturgrenze der Anlaßbarkeit des Dieselmotors durch die Verwendung der erfindungsgemäßen Vorrichtung um ungefähr 10—20° vermindert.

Ein weiterer Vorteil der erfindungsgemäßen Vorrichtung besteht darin, daß infolge der geringen elektrischen Leistungsaufnahme der thermoelektrischen Zündvorrichtung der Akkumulator während des Anlassens kaum belastet wird und daher mehr elektrische Leistung für den Anlasser übrigbleibt.

Die erfindungsgemäße Vorrichtung ist auch vorteilhaft, weil die eingesaugte Luft bzw. der Motor durch die während des Verbrennes des Kraftstoffes des Motors entstehende Wärme vorgewärmt wird, also der Kaltstart kein gesondertes Zusatzmaterial, Mittel oder äußere Energiequelle beansprucht.

Die erfindungsgemäße technische Lösung ist nich auf die zeichnungsgemäße Ausführungsform eingeschränkt.

Die erfindungsgemäße Vorrichtung kann derart ausgebildet werden, daß sie von dem Fahrersitz aus von einer Person betätigt (bedient) werden kann und daß die Betätigung (Bedienung) im Ganzen mit der Bedienung des bei Diesel-Motoren mit geteiltem Brennraum verwendeten Anlaßhilfsmittels (Vorwärmung mit Glühkerze) übereinstimmt, was für alle Kraftfahrer eine routineartig eingeübte Handlung ist.

Die Erfindung wird anhand einer vorteilhaften Ausführungsform mit Hilfe der Zeichnung näher erläutert. Es zeigen:

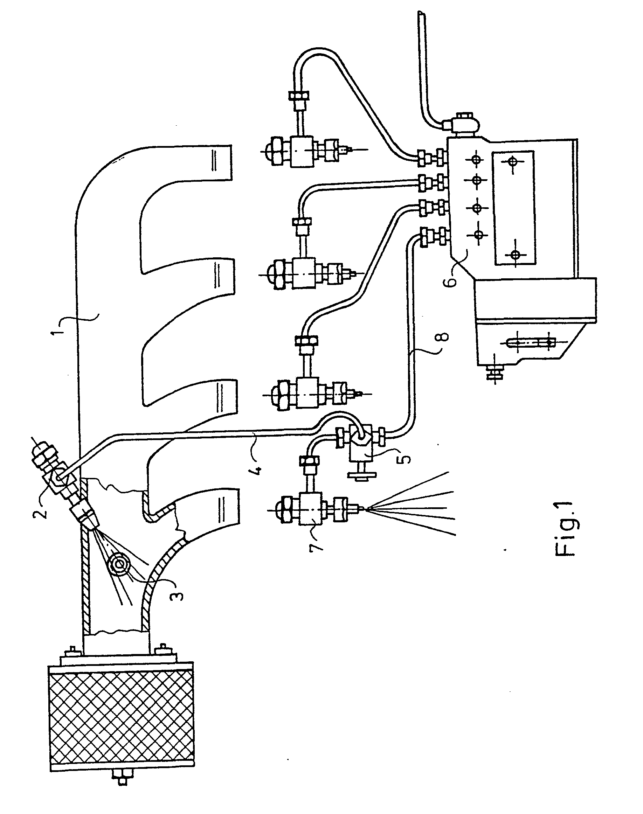

Fig. 1 den prinzipiellen Aufbau der erfindungsgemäßen Vorrichtung,

Fig. 2 das in das Druckrohr eingebaute Anzapfventil,

Fig. 3 den in das Saugrohr eingebauten Hochdruckkraftstoffzerstäuber.

An ein Saugrohr 1 eines Diesel-Motors ist ein Kraftstoffzerstäuber 2 angeschlossen, in dessen Zerstäubungsstrahl eine thermoelektrische Zündvorrichtung 3 (elektrischer Glühfaden) angeordnet ist. An den Kraftstoffzerstäuber 2 ist eine Rohrleitung 4 angeschlossen, welche über ein Abzapfventil 5 an ein von einer Einspritzpumpe 6 zu einer dem einen Zylinder zugehörigen Einspritzdüse 7 führendes Druckrohr 8 angeschlossen ist.

Das Abzapfventil 5 ist geeignet, die zur Einspritzdüse 7 geführte Kraftstoffdosis teilweise oder im Ganzen zum Kraftstoffzerstäuber 2 zu leiten. Vor dem Anlassen wird das Abzapfventil 5 in eine derartige Stellung gebracht, daß dieses das Druckrohr 8 zu dem Kraftstoffzerstäuber 2 hin öffnet. Die thermoelektrische Zündvorrichtung 3 wird unter Strom gestellt und nach dem Aufglühen der thermoelektrischen Zündvorrichtung (des elektrischen Glühfadens) wird der Diesel-Motor gestartet. Wenn im Druckrohr 8 eine Dosierung stattfindet, wird der Kraftstoff durch den Kraftstoffzerstäuber 2 in Form von feinem Riesel in dei im Saugrohr befindliche Luft und auf den elektrischen Glühfaden 3 gebracht, auf dessen Einwirkung der Kraftstoff gezündet und verbrannt wird, wodurch das Saugrohr und die darin befindliche Luft erwärmt wird. Der sich soeben im Saugtakt bewegende Kolben saugt dieses Warmluft-Verbrennungsprodukt-Gemisch ein, welches über einen genügenden Wärmeinhalt verfügt, daß am Ende des Verdichtungstaktes desselben Zylinders die Zündtemperatur des eingespritzten Kraftstoffes überschritten wird und dadurch der Motor anspringt. Der zur Anlaßbarkeit des Motors nötige Sauerstoffgehalt des in den Zylinder eingesaugten Warmluft-Verbrennungspodukt-Gemisches ist durch die zweckmäßige Wahl der Anordnung des Kraftstoffzerstäubers 2 und durch eine angepaßte Kraftstoffmenge sichergestellt, die durch das Öffnen des Abzapfventils 5 abgezapft wird. Der im Saugrohr verbrannte Kraftstoff erwärmt das Saugrohr während einiger Motorumdrehungen dermaßen, daß Luft mit einem zur Anlaßbarkeit erforderlichen Wärmeinhalt nicht nur in den sich nach der Zerstäubung im Saugrohr im Saugtakt befindenden Zylinder, sondern auch in die anderen Zylinder gelangt. Nach dem Anlassen des Motors wird die thermoelektrische Zündvorrichtung 3 stromlos gestellt und das Abzapfventil 5 wird in den geschlossenen Zustand gebracht, damit auch die an dem Druckrohr 8 angeschlossene Einspritzdüse 7 die Dosierung in den zugehörigen Zylinder beginnen kann.

Zum richtigen Betrieb der erfindungsgemäßen Vorrichtung soll sichergestellt werden, daß das Abzapfventil 5 auch für eine Teilabzapfung der mittels der Einspritzpumpe 6 durch das Druckrohr 8 zur Einspritzdüse 7 gelieferten Kraftstoffmenge (Dosis) geeignet ist. Das kann zweckmäßig durch eine veränderlich einstellbare Drossel verwirklicht werden. Weiterhin soll sichergestellt werden, daß das Abzapfventil 5 sowohl im geschlossen wie im offenen Zustand und während des Betriebs gegen den darin auftretenden Druck (fallweise einige hundert Bar) gegen den Außenraum entsprechend abgedichtet wird.

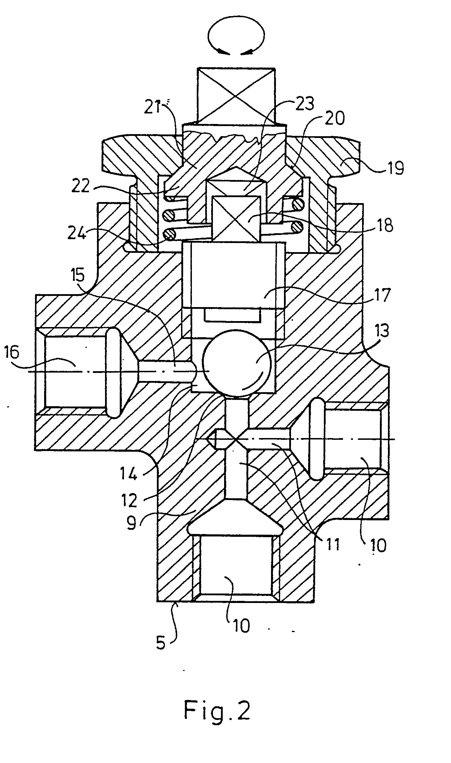

Die Erfüllung dieser Bedingungen kann mit einem derartigen Hochdruck-Abzapfventil gewährleistet werden, dessen Ausführungsform in Fig. 2 als Beispiel dargestellt ist. In einem Ventilgehäuse 9 sind zum Anschließen des Druckrohrs 8 geeignete Druckrohranschlüsse 10 mit Gewinde ausgebildet, welche über Durchflußbohrungen 11 miteinander verbunden sind. Das Ende der einen Durchflußbohrung 11 ist als Ventilsitz 12 ausgebildet. Oberhalb des Ventilsitzes 12 ist ein Ventilkörper 13 angeordnet, welcher vorzugsweise eine Stahlkugel ist. Ein den Ventilkörper 13 umgebender Ventilraum 14 ist über eine Bohrung 15 am im Ventilgehäuse 9 ausgebildeten Gewinde-Abzapfanschluß 16 angeschlossen, welcher als Anschluß einer zum Kraftstoffzerstäuber 2 führenden Rohrleitung 4 dient. Oberhalb des Ventils 13 ist eine Ventilpresse 17 angeordnet, welche vorzugsweise eine mit einem Mitnehmeranschluß 18 versehene Schraube ist. Das Ventilgehäuse 9 ist mit einem Deckel 19 mit Bohrung geschlossen, wobei der Innenflansch der Bohrung des Deckels 19 als Ventilsitz 20 ausgebildet ist. In der Bohrung des Deckels 19 ist ein Betätigungsbolzen 21 angeordnet, an dessen innerhalb des Deckels 19 befindlichen Teil eine auf dem Ventilsitz 20 aufliegende Ventilscheibe 22 und ein am Mitnehmeranschluß 18 der Ventilpresse 17 angeschlossener Mitnehmeranschluß 23 ausgebildet sind. Die Ventilscheibe 22 des Betätigungsbolzen 21 wird von einem flexiblen Element 24 (einer Feder) an den Ventilsitz 20 des durchbohrten Deckels 19 gedrückt.

Das Abzapfventil funktioniert wie folgt:

Schließen:

Bei Verdrehen des Betätigungsbolzens 21 nach rechts wird die Ventilpresse 17 von dem Mitnehmeranschluß 23 gedreht und von der Ventilpresse 17 wird das Ventil 13 auf den Ventilsitz 12 gedrückt; daher kann der Kraftstoff durch die Gewindeanschlüsse 10 des Ventilgehäuses 9 von der Einspritzpumpe 6 über die Rohrleitung 8 nur zu der Einspritzdüse 7 strömen.

Öffnen:

Bei Verdrehen des Betätigungsbolzens 21 nach links wird die Ventilpresse 17 von dem Mitnehmeranschluß 23 gedreht und die Ventilpresse 17 bewegt sich nach oben und gibt freien Weg für das Aufsteigen des Ventilkörpers 13. Der Ventilkörper 13 wird daher unter dem Druck des Kraftstoffes vom Ventilsitz 12 abgehoben. Der Kraftstoff gelangt in dieser Weise in den Ventilraum 14, dann durch die Bohrung 15 über die an dem Gewindeanschluß 16 angeschlossene Rohrleitung 4 zu dem im Saugrohr 1 angeordneten Kraftstoffzerstäuber 2.

Teilweise Anzapfung:

Bei geringer Verdrehung des Betätigungsbolzens 21 nach links wird die Ventilpresse 17 mittels des Mitnehmeranschlusses 23 nur geringfügig gedreht, wodurch sich die Ventilpresse 17 nur geringfügig nach oben bewegt und nur einen geringen Weg für das Aufsteigen des Ventilkörpers 13 vom Ventilsitz 12 freigibt. Somit strömt ein Teil des während der Zufuhr in den Bohrungen 11 strömenden Kraftstoffs zur Einspritzdüse 7 weiter und der andere Teil des Kraftstoffes gelangt über den Ventilraum 14, die Bohrung 15 und die an dem Gewindeabschluß 16 angeschlossene Rohrleitung 4 in den im Saugrohr 1 angeordneten Kraftstoffzerstäuber 2. Der Anteil des zur Einspritzdüse 7 und zum Kraftstoffzerstäuber 2 gelangenden Kraftstoffes kann über die Weglänge der zum Anheben des Ventils 13 freigegebenen Bewegung verändert werden (Regelung mit Drossel).

Dichtung;

Die Dichtigkeit des Abzapfventils 5 zum Außenraum wird in geschlossenem Zustand von dem auf dem Ventilsitz 12 aufliegenden Ventilkörper 13 erreicht, denn der Kraftstoff strömt in dieser Stellung nur in den einen Teil der das Druckrohr 8 bildenden Durchflußbohrungen 11. In der offenen oder teilweise offenen Abzapfstellung des Abzapfventils 5 befindet sich der Hochdruckkraftstoff im Ventilraum 14, welcher neben dem Schraubgewinde der Ventilpresse 17 auch in den Raum unterhalb des durchbohrten Deckels 19 gelangt. Das Ausströmen des Kraftstoffes durch den Passungsspalt zwischen der Bohrung des Deckels 19 und dem Betätigungsbolzen 21 ist durch eine entsprechende Anpassung des Ventilsitzes 20 und der Ventilscheibe 22, und von der von der vorgespannten Feder 24 ausgeübte Kraft verhindert. Durch den im unterhalb des Betätigungsbolzens 21 befindlichen Raum entstehenden Kraftstoffdruck wird der dichte Verschluß zwischen dem Ventilsitz 20 und der Ventilscheibe 22 noch weiter erhöht.

Als ein am Saugrohr 1 angeschlossener Kraftstoffzerstäuber 2 kann auch die bekannte und herkömmliche Einspritzdüse eines Diesel-Motors verwendet werden, wenn deren Öffnungsdruck auf einen niedrigeren Wert eingestellt wird als derjenige der für die einzelnen Zylinder des Motors verwendeten Einspritzdüsen.

Die Anwendung der besonders nachträglich einbaubaren erfindungsgemäßen Vorrichtung wird dadurch erleichtert, daß der im Saugrohr 1 angeordnete Kraftstoffzerstäuber 2 und die thermoelektrische Zündvorrichtung 3 als eine Baueinheit ausgebildet sind.

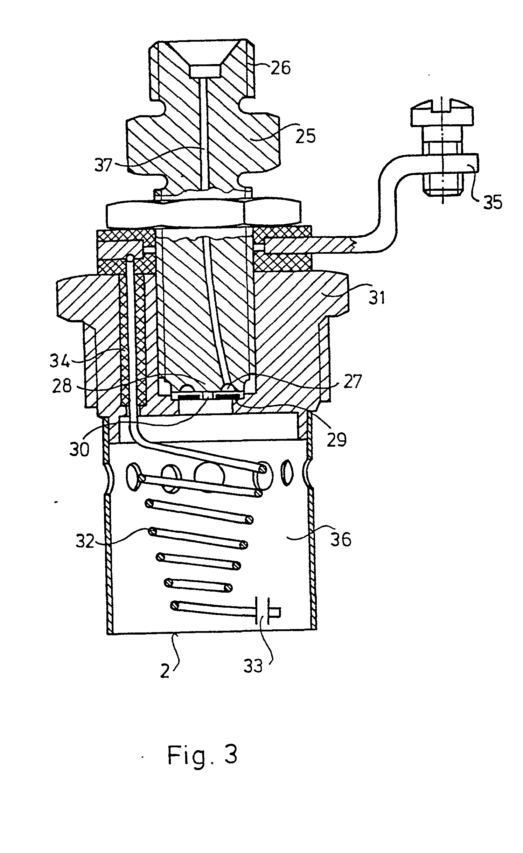

Eine der erfindungsgemäßen Anforderungen entsprechende Ausführungsform des an dem Saugrohr 1 angeschlossenen Kraftstoffzerstäubers 2 ist in Fig. 3 als beispiel dargestellt.

An einem Ende des Zerstäuberrumpfes 25 sind ein für das Anschließen der Rohrleitung 4 geeigneter Gewindanschluß 26 und am anderen Ende ein, eine Warze 28 umgebender Ringkanal 27 ausgebildet, welche miteinander über eine Bohrung 37 verbunden sind. Der Ringkanal 27 wird mittels einer Membran 29 abgeschlossen, welche auf der Oberfläche der Warze 28 aufliegt und an welcher eine der Oberfläche der Warze 28 gegenüberliegende Bohrung 30 ausgebildet ist. Die Membran 29 wird von einem Zerstäubergehäuse 31 an den Zerstäuberrumpf 25 gedrückt. Das Zerstäubergehäuse 31 ist für sein Anschließen am Saugrohr 1 geeignet ausgebildet und vorzugsweise mit einem Außengewinde versehen.

Zu einem als eine Baueinheit ausgebildeten Kraftstoffzerstäuber 2 und einer thermoelektrischen Zündvorrichtung 3 ist ein elektrischer Glühfaden 32 der Bohrung 30 der Membran 29 gegenüberliegend angeordnet, wobei das eine Ende 33 des elektrischen Glühfadens 32 an einem Körper, das andere Ende 34 mit einer isolierten Ausführung an einem elektrischen Anschluß 35 angeschlossen ist. Der spiralförmige elektrische Glühfaden 32 wird von einem gelöcherten Mantel 36 gegen mechanische Beschädigung und gegen die übermäßige Kühlwirkung der im Saugrohr strömenden Luft geschützt.

Der Kraftstoffzerstäuber 2 arbeitet wie folgt:

Der über die Rohrleitung 4 zum Gewindeanschluß 26 des Zerstäuberrumpfes 25 gelangende Hochdruckkraftstoff gelangt durch die Bohrung 37 in den ringförmigen Kanal 27. Die Membran 29 wird durch den einwirkenden Druck verformt, so daß die Membran 26 von der Warze 28 abgehoben wird und die Bohrung 30 freigibt; in dieser Weise kann der Kraftstoff in Form von feinem Riesel in die im Saugrohr 1 strömende Luft und auf den Glühfaden 32 gelangen. Die Feinheit (Korngröße) der Zerstäubung, die Form und die Abmessung des zerstäubten Kraftstoffstrahls können über das Material, die Dicke, den Durchmesser (Federkonstante) der Membran 29 und den Durchmesser (Form) der Bohrung 30 beeinflußt werden.

**Patentansprüche**

1. Vorrichtung zum Vorwärmen der Ansaugluft eines Mehrzylinder-Dieselmotors, bei welcher in dem Saugrohr (1) des Motors eine thermoelektrische Zündvorrichtung (3) und ein Hochdruck-Kraftstoffzerstäuber (2) angeordnet sind, der über eine Rohrleitung (4) und ein Hochdruck-Abzapfventil (5) mit der Druckseite der Einspritzpumpe (6) des Motors verbindbar ist, dessen Einspritzdüsen mit der Einspritzpumpe (6) über Druckrohre (8) verbunden ist, dadurch gekennzeichnet, daß das Hochdruck-Abzapfventil (5) ein enjustierbares, die Vorwärmkraftstoffmenge steuerndes Ventil ist, das in das Druckrohr (8) zwischen der Einspritzpumpe (6) des Motors und der Einspriztdüse nur eines der Zylinder eingeschaltet ist, wobei durch das Hochdruck-Abzapfventil (5) nur eine solche Teilmenge des Kraftstoffes in das Saugrohr (1) eingespeist wird, daß das Warmluft-Verbrennungsprodukt-Gemisch den zur Anlaßbarkeit des Motors nötigen Sauerstoffgehalt aufweist und daß den Motoreinspritzdüsen während dieser Vorwärmphase die zum Starten erforderliche Kraftstoffmenge zugeführt wird.

2. Vorrichtung nach Anspruch 1, dadurch gekennzeichnet, daß das Gehäuse (9) des Abzapfventils (5) zwei über Durchflußbohrungen (11) miteinander in Verbindung stehende Rohranschlüsse (10) für das Druckrohr (8) aufweist, eine der Durchflußbohrungen (11) über ein Ventil (12, 13) mit einem Gewinde-Abzapfanschluß (16) für die Kohrleitung (4) verbindbar ist und daß dem Ventilkörper (13) des Ventils ein in einer Gewindebohrung des Gehäuses (9) geführtes Druckstück (17) zugeordnet ist, das über Mitnehmerteile (18 bzw. 23) mit einem Betätigungsbolzen (21) gekuppelt ist, der mittels einer Feder (24) gegen einen Ventilsitz (20) eines durchbohrten Deckels (19) gedrückt ist.

3. Vorrichtung nach Anspruch 1 oder 2, dadurch gekennzeichnet, daß der Hochdruckzerstäuber (2) und die thermoelektrische Zündeinrichtung (3) zu einer Baueinheit zusammengefaßt sind.

4. Hochdruckzerstäuber (2) der Vorrichtung nach Anspruch 1, bei dem das eine Ende des Zerstäuberrumpfes (25) mit einem Gewindeanschluß (26) versehen ist und gegenüber dem anderen Ende des Zerstäuberrumpfes (25) ein elektrischer Glühfaden (32) angeordnet ist, dessen eines Ende (33) an Masse liegt und dessen anderes Ende (34) isoliert mit einem elektrischen Anschluß (35) verbunden ist und der von einem durchlöcherten Mantel (36) umgeben ist, dadurch gekennzeichnet, daß der Gewindeanschluß (26) über eine Bohrung (37) mit einem ringförmigen Kanal (27) verbunden ist, der an dem elektrischen Glühfaden (32) benachbarten Ende des Zerstäuberrumpfes (25) ausgebildet ist und von einer mit einer Bohrung (30) versehenen Membran (29) zum Glühfaden hin abdeckbar ist, die vom Zerstäubergehäuse (31) gegen den Zerstäuberrumpf (25) gedrückt wird.

**Revendications**

1. Dispositif de préchauffage de l'air d'admission d'un moteur Diesel polycylindrique, dans lequel sont disposés dans la tubulure d'admission (1) du moteur, un système d'allumage thermoélectrique (3) et un pulvérisateur de carburant à haute pression qui est susceptible d'être relié, par une conduite tubulaire (4) et une valve de soutirage à haute pression (5), à la sortie de pression de la pompe d'injection (6) du moteur dont l'injecteur est relié à la pompe d'injection (6) par une conduite sous pression (8), caractérisé en ce que la valve de soutirage à haute pression (5) est une valve ajustable de commande de la quantité de carburant réchauffé, qui est branchée sur la conduite sous pression (8) entre la pompe d'injection (6) du moteur et l'injecteur d'un seul cylindre, de manière que seulement une partie du carburant soit injectée par la valve de soutirage à haute pression (5) dans la tubulure d'admission, en ce que le mélange de produits de combustion et d'air chaud présente une teneur en oxygène suffisante pour le démarrage du moteur et en ce que les injecteurs du moteur reçoivent pendant cette phase de préchauffage la quantité de carburant nécessaire pour le démarrage.

2. Dispositif selon la revendication 1, caractérisé en ce que le corps (9) de la valve de soutirage (5) comporte deux raccords tubulaires (10) pour la conduite sous pression (8) qui sont reliés entre eux par des passages d'écoulement (11), dont l'un est susceptible d'être relié par une valve (12, 13) à un raccord de soutirage fileté (16) pour la conduite tubulaire (4), et en ce qu'au corps (13) de la valve est associée une butée d'appui (17) guidée dans un alésage fileté du corps (9) et couplée par des pièces d'entraînement (18, 23) à un poussoir d'actionnement (21) appliqué par un ressort (24) sur un siège de clapet (20) d'un couvercle (19) muni d'un alésage.

3. Dispositif selon la revendication 1 ou 2, caractérisé en ce que le pulvérisateur à haute pression (2) et le dispositif d'allumage thermoélectrique (3) sont assemblés en un module.

4. Pulvérisateur à haute pression (2) du dispositif selon la revendication 1, dans lequel l'une des extrémités du corps (25) du pulvérisateur est munie d'un raccord fileté (26) tandis qu'à l'autre extrémité, est disposé un filament électrique incandescent (32) dont l'une des extrémités est à la masse et dont l'autre extrémité isolée est reliée à un raccord électrique (35) et qui est entourée d'une enveloppe perforée (36), caractérisé en ce que le raccord fileté (26) est relié par un alésage (37) à un canal annulaire (27) formé à l'extrémité du corps du pulvérisateur (25) située à proximité du filament électrique incandescent (32) et susceptible d'être obturé par une membrane (29) pourvue d'une ouverture (30), cette membrane étant appliquée par le carter (31) du pulvérisateur sur le corps (25) du pulvérisateur.

**Claims**

1. Apparatus for preheating the intake air of a multi-cylinder diesel engine, wherein a thermoelectrical ignition device (3) and a high-pressure fuel spray diffuser (2) are arranged in the intake pipe (1) of the engine, the spray diffuser (2) being connectable to the delivery side of the injection pump (6) of the engine through a pipeline (4) and a high-pressure tap valve (5), and the injection nozzles of the engine being connected to the injection pump (6) through pressure pipes (8), characterised by the high-pressure tap valve (5) being an adjustable valve controlling the preheating fuel quantity and being connected into the pressure pipe (8) between the injection pump (6) of the engine and the injection nozzle (7) of only one of the cylinders, only such a portion of the fuel being supplied through the high-pressure tap valve (5) into the intake pipe (1) that the mixture of heated air and combustion products comprises the oxygen content necessary for the startability of the engine; and by supplying, during this preheating stage, the fuel quantity necessary for starting to the injection nozzles of the engine.

2. Apparatus according to claim 1, characterized in that the casing (9) of the tap valve (5) comprises two pipe connectors (10) for the pressure pipe (8) communicating with each other through flow bores (11), one of the flow bores (11) is connectable through a valve (12, 13) with a tapped pipeline connector (16) for the pipeline (4), and a press piece (17) guided in a threaded bore of the casing (9) is associated with the valve body (13) of the valve, which press piece (17) is coupled through driver parts (18 and 23) to an actuating bolt (21) urged against a valve seat (20) of a bored cap (19) by a spring (24).

3. Apparatus according to claim 1 or 2, characterised in that the high-pressure spray diffuser (2) and the thermoelectric ignition device (3) are integrated in one structural unit.

4. High-pressure spray diffuser (2) one of the apparatus according to claim 1, wherein one end of the spray diffuser body (25) is provided with a threaded connector (26) and an electrical incandescent filament (32) faces the other end of the spray diffuser body (25), one end (33) of the filament being grounded while the other end (34) is connected to an electrical terminal (35) in an insulating way, the filament (32) being surrounded by a perforated jacket (36), characterised in that the threaded connector (26) communicates through a bore (37) with an annular channel (27) which is arranged at the end of the spray diffuser body (25) adjacent the electrical incandescent filament (32) and is coverable towards the filament (32) by a membrane (29) provided with a bore (30) and pressed against the spray diffuser body (25) by the spray diffuser housing (31).

Fig.1

Fig.2

Fig. 3